Europäisches Patentamt

European Patent Office

Office européen des brevets

(11) Veröffentlichungsnummer: **0 284 808 B1**

# EUROPÄISCHE PATENTSCHRIFT

(45) Veröffentlichungstag der Patentschrift: **16.10.91**

(51) Int. Cl.⁵: **B23H 11/00**

(21) Anmeldenummer: **88103246.0**

(22) Anmeldetag: **03.03.88**

(54) **Funkenerosionsmaschine.**

(30) Priorität: **02.04.87 DE 3711132**

(43) Veröffentlichungstag der Anmeldung:
**05.10.88 Patentblatt 88/40**

(45) Bekanntmachung des Hinweises auf die
Patenterteilung:
**16.10.91 Patentblatt 91/42**

(84) Benannte Vertragsstaaten:
**CH ES FR IT LI**

(56) Entgegenhaltungen:
**DE-A- 2 540 664**
**GB-A- 1 218 543**

(73) Patentinhaber: **AEG-Elotherm GmbH**
**Hammesberger Strasse 31**
**W-5630 Remscheid-Hasten(DE)**

(72) Erfinder: **Stengel, Edgar**
**Erdelenstrasse 35**
**W-5630 Remscheid(DE)**
Erfinder: **Fey, Franz-Josef**
**Reinshagener Strasse 117**
**W-5630 Remscheid(DE)**

(74) Vertreter: **Patentanwaltsbüro Cohausz & Flo-**
**rack**
**Schumannstrasse 97**
**W-4000 Düsseldorf 1(DE)**

Rank Xerox (UK) Business Services

## Beschreibung

Die Erfindung betrifft eine Funkenerosionsmaschine mit einem verfahrbaren Arbeitstisch zum Aufspannen der zu bearbeitenden Werkstücke, einem Behälter um den Arbeitstisch zur Aufnahme der dielektrischen Flüssigkeit und einem Portal, in dessen Traverse die Funkenerosionselektrode mit Senkvorrichtung angeordnet ist.

Bei einem Werkstückwechsel wird bei bekannten Funkenerosionsmaschinen der Arbeitstisch zum Aufspannen der Werkstücke mit um ihn herum angeordnetem Behälter aus dem ihn umgebenden Portal herausgefahren. Anschließend werden die Verschlußplatten, das sind die seitlichen Wände des Behälters für die Aufnahme der dielektrischen Flüssigkeit, abgenommen, um ungehinderten Zugang zu dem auf dem Arbeitstisch aufgespannten Werkstück zu erhalten, damit dieses entfernt und ein neues zu bearbeitendes Werkstück aufgespannt werden kann. Bei einer handelsüblichen Ausführung einer Funkenerosionsmaschine werden die Verschlußplatten mittels Kran hochgehoben und an der Traverse des Portals angehängt. Es wäre zwar auch möglich, die am Kran hängenden Verschlußplatten neben der Maschine abzustellen, jedoch wird hierfür wieder zusätzlicher Raum benötigt, der häufig nicht zur Verfügung steht.

Aufgabe der vorliegenden Erfindung ist es, an einer Funkenerosionsmaschine Mittel vorzusehen, um die Verschlußplatten in möglichst einfacher Weise schnell und raumsparend an einer Stelle unterzubringen, wo sie während des Werkstückwechsels nicht stören.

Zur Lösung dieser Aufgabe wird bei einer Funkenerosionsmaschine der eingangs genannten Gattung erfindungsgemäß vorgeschlagen, an jeder Portalstütze für eine daran aufzunehmende Verschlußplatte mindestens zwei annähernd waagerechte Aufnehmer, bevorzugt Bolzen mit Haken, anzuordnen. Diese Aufnehmer greifen in Ausnehmungen, wie Sacklochbohrungen, Schlitze oder dergleichen, der Verschlußplatte hinein, wenn diese mit dem Arbeitstisch an die Aufnehmer herangefahren wird. Mit einem Antrieb, insbesondere einem pneumatischen Antrieb, werden die Aufnehmer mit angehängter Verschlußplatte in Richtung weg vom Behälter bewegt. Diese Bewegung kann bogenförmig sein in einer beliebigen Ebene, jedoch bevorzugt in einer waagerechten oder vertikalen Ebene. Durch die Bewegung der Aufnehmer wird also die Verschlußplatte von dem Dielektrikums-Behälter weggeschwenkt und zur Portalstütze hingezogen.

Auf diese Weise gelingt es einmal, die Verschlußplatten raumsparend so unterzubringen, daß sie beim Werkstückwechsel nicht stören. Ferner gelingt es in einfacher Weise, durch Verfahren des Arbeitstisches die Verschlußplatten in eine solche Position zu bringen, daß sie von den an den Portalstützen angebrachten Mitteln einfach und schnell aufgenommen werden können. Der Arbeitstisch wird erst nahe an die eine Portalstütze herangefahren und dann, nach dem Aufnehmen einer Verschlußplatte durch die dort angebrachten Mittel wird er mit Dielektrikums-Behältern an die gegenüberliegende Portalstütze herangefahren, so daß die andere Verschlußplatte an dieser Stütze ebenfalls aufgehängt werden kann. Die beiden Verschlußplatten des Dielektrikums-Behälters sind sodann an den gegenüberliegenden Stützen des Portals abgestellt. Anschließend kann der Arbeitstisch mit beidseitig offenem Dielektrikums-Behälter zum Werkstückwechsel aus dem Portal herausgefahren werden.

Es wird weiterhin bevorzugt, jeweils zwei Aufnehmer mit einem gemeinsamen Antrieb zu betätigen. Pro Verschlußplatte genügt dann ein Antrieb bzw. bei vier Aufnehmern zwei Antriebe.

Gemäß einer weiteren Ausgestaltung der Erfindung sind in den Portalstützen Hebel um eine vertikale Achse schwenkbar gelagert, die an einem Ende mit einem hydraulisch oder pneumatischen Antrieb verbunden und am anderen Ende an einer Verschlußplatte anlenkbar sind. Mittels dieser Hebel, die eine robuste Ausführung gewährleisten, wird die angehängte Verschlußplatte in einer waagerechten Ebene vom Behälter weggeschwenkt.

Eine weitere vorteilhafte Ausgestaltung der erfindungsgemäßen Funkenerosionsmaschine mit den angegebenen Merkmalen ergibt sich dadurch, daß die Zufuhrleitung für Dielektrikum in mindestens einer der Verschlußplatten angeordnet ist. Diese Ausführung hat den Vorteil, daß die Zuleitungen für die dielektrische Flüssigkeit zu der Verschlußplatte kurz gehalten werden können, weil die Verschlußplatte keine langen Verfahrwege hat. Die zu überbrückende Strecke liegt zwischen der Aufhängestellung an der Portalstütze und der anderen Endstellung in der Arbeitsstellung des Dielektrikums-Behälters während der funkenerosiven Bearbeitung.

Anhand der Zeichnung wird die Erfindung näher erläutert. Es zeigen:

Figur 1 eine Ausführung in perspektivischer Darstellung und

Figur 2 eine andere Ausführung in Draufsicht.

Gleiche Teile sind in den beiden Figuren mit denselben Bezugzeichen versehen.

Die Funkenerosionsmaschine weist ein Portal 1 mit Portalstützen 2 und Traverse 3 auf. An der Traverse 3 ist die Senkvorrichtung 4 für die hier nicht erkennbare Funkenerosionselektrode beweglich angehängt.

Auf einem Sockel 5 zwischen den Portalstützen 2 ist ein Wagen 6 auf Schienen 7 verfahrbar. Auf dem Wagen 6 ist ein Arbeitstisch 8 als Kreuztisch vorgesehen, auf dem ein nicht dargestelltes zu bearbeitendes Werkstück aufgespannt werden kann. Um den Arbeitstisch 8 ist der Behälter 9 für die Aufnahme der dielektrischen Arbeitsflüssigkeit angeordnet. Der Behälter 9 besteht aus einer Vorderplatte 10, einer nicht dargestellten Rückplatte und den seitlichen Verschlußplatten 11. Die Verschlußplatten 10 und 11 werden durch Schließmechanismen 12 dichtend gegeneinander gespannt.

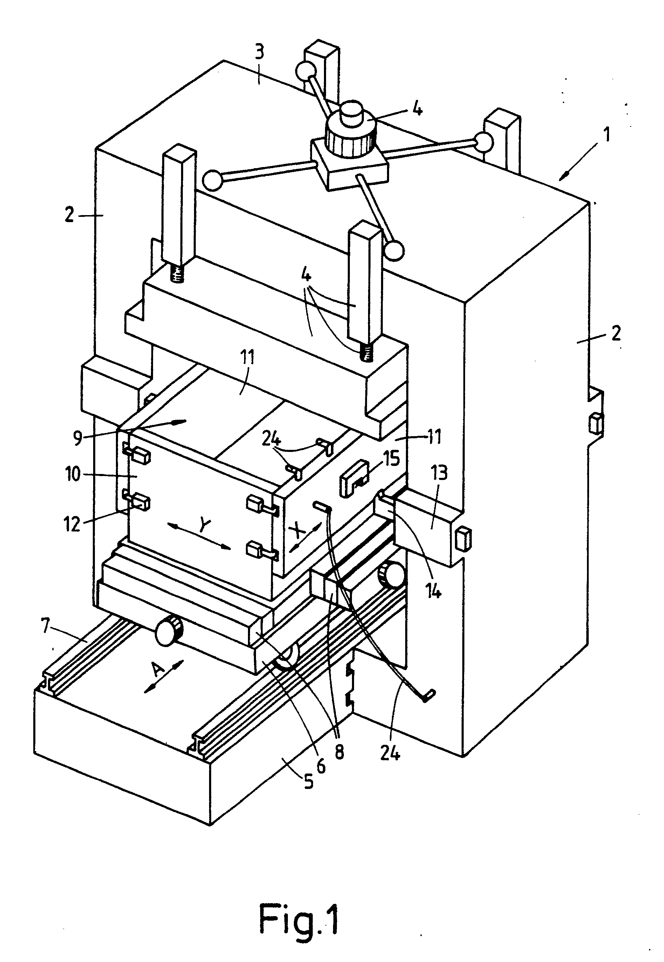

An den Portalstützen 2 sind die Mittel 13 zum Anhängen der Verschlußplatten 11 vorgesehen. Bei der Ausführung gemäß Figur 1 ist ein waagerechter Bolzen 14 mit hakenförmig gebogenem Ende vorgesehen, der in einer Ausnehmung 15 an der Verschlußplatte 11 hineinpaßt. Der in Figur 1 erkennbare Abstand zwischen Verschlußplatte 1 und Bolzen 14 wird durch Verfahren des Arbeitstisches 8 in Richtung auf den Haken überbrückt. Der Tisch 8 wird soweit verfahren, bis der Bolzen 14 mit seinem hakenförmigen Ende in die Ausnehmung 15 an der Verschlußplatte 11 eingreift. Nach dem Lösen des Schließmechanismusses 12, der die Verschlußplatte 11 mit der Vorderwand 10 und der Rückwand verbindet, kann der Bolzen 14 um eine an der Portalstütze 2 ortsfeste waagerechte Schwenkachse aufwärtsgeschwenkt werden unter Mitnahme der angehängten Verschlußplatte 11. Dabei entfernt sich die Verschlußplatte 11 vom Behälter 9 und wird in Richtung auf die Portalstütze 2 gezogen.

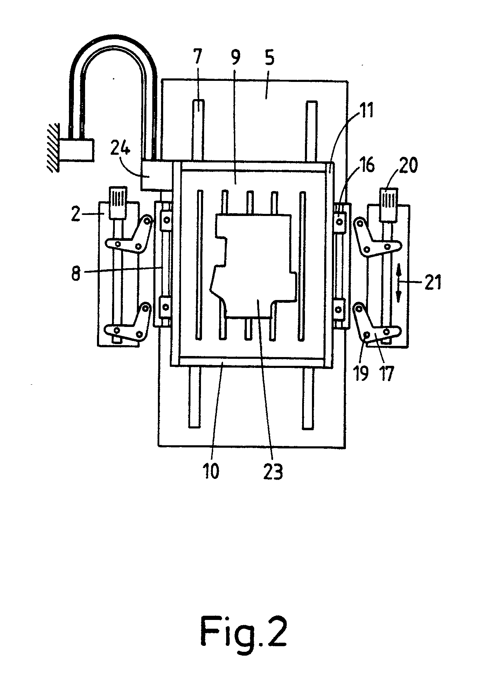

Bei der aus Figur 2 ersichtlichen Ausführung sind an den Verschlußplatten 11 des Behälters 9 jeweils zwei oder vier Laschen 16 angebracht, in die nach seitlichem Verfahren des Arbeitstisches 8 mit dem Behälter 9 Hebel 17 mit ihrem einen Ende eingreifen. Durch Sicherungsstifte 18 können die Hebel 17 mit den Laschen 16 verbunden werden. Die um vertikale Achsen 19 in den Portalstützen 2 schwenkbar gelagerten Hebel 17 werden paarweise mittels eines gemeinsamen Antriebs 20 in Pfeilrichtung 21 bewegt. Das mit den Laschen 16 an den Verschlußplatten 11 befestigte Ende der Hebel 17 führt dabei eine bogenförmige Bewegung aus. Diese bogenförmige Bewegungsbahn 22 ist in gestrichelten Linien angedeutet. Bei dieser nur wenige Zentimeter betragenden Bewegung wird die Verschlußplatte 11 vom Behälter 9 entfernt und an der Portalstütze 2 bis zum erneuten Schließen des Behälters 9 deponiert. Nach dem Aufhängen beider Verschlußplatten 11 an den gegenüberliegenden Portalstützen 2 kann der nun beidseitig offene Behälter 9 aus dem Portal herausgefahren werden, wonach das Werkstück 23 vom Arbeitstisch 8 entfernt und durch ein neues ersetzt werden kann. Vor Beginn der abtragenden Bearbeitung des Werkstücks 23 wird der Arbeitstisch 8 zwischen die Portalstützen 2 gefahren, und nacheinander werden die beiden Verschlußplatten 11 montiert. Nach dem Füllen des Behälters 9 mit dielektrischer Flüssigkeit über die Zufuhrleitung 24 an bzw. in mindestens einer der beiden Verschlußplatten 11 und Herunterfahren der Funkenerosionselektroden kann die abtragende Bearbeitung begonnen werden.

## Patentansprüche

1. Funkenerosionsmaschine mit einem verfahrbaren Arbeitstisch (8) zum Aufspannen der zu bearbeitenden Werkstücke (23), einem Behälter (9) um den Arbeitstisch (8) zur Aufnahme der dielektrischen Flüssigkeit und einem Portal (1), in dessen Traverse (3) die Funkenerosionselektrode mit Senkvorrichtung angeordnet ist, **dadurch gekennzeichnet,** daß an jeder Portalstütze (2) für eine daran aufzunehmende Verschlußplatte (11) mindestens zwei annähernd waagerechte Aufnehmer (13, 14, 17) angeordnet sind, die in Ausnehmungen (15) der Verschlußplatten (11) hineinpassen und die mit einem insbesondere pneumatischen Antrieb (20) zur Ausführung einer Bewegung mit angehängter Verschlußlatte (11) in Richtung weg vom Behälter (9) gekoppelt sind.

2. Funkenerosionsmaschine nach Anspruch 1, **dadurch gekennzeichnet,** daß jeweils zwei Aufnehmer (14, 17) mit einem gemeinsamen Antrieb (20) betätigbar sind.

3. Funkenerosionsmaschine nach Anspruch 2, **dadurch gekennzeichnet,** daß die Aufnehmer Bolzen (14) mit Haken sind.

4. Funkenerosionsmaschine mit einem verfahrbaren Arbeitstisch (8) zum Aufspannen der zu bearbeitenden Werkstücke (23), einem Behälter (9) um den Arbeitstisch (8) zur Aufnahme der dielektrischen Flüssigkeit und einen Portal (1), in dessen Traverse (3) die Funkenerosionselektrode mit Senkvorrichtung angeordnet ist, **dadurch gekennzeichnet,** daß in den Portalstützen (2) Hebel (17) um eine vertikale Achse schwenkbar gelagert sind, die an einem Ende mit einem hydraulischen oder pneumatischen Antrieb (20) verbunden und am anderen Ende an einer Verschlußplatte (11) anlenkbar sind.

5. Funkenerosionsmaschine nach einem der Ansprüche 1 bis 4, **dadurch gekennzeichnet,** daß die Zufuhrleitung (24) für Dielektrikum in mindestens einer der Verschlußplatten (11) angeordnet ist.

## Claims

1. A spark erosion machine having a travelling working table (8) for the clamping of the workpieces (23) to be processed, a tank (9) around the working table (8) for receiving the dielectric liquid, and a portal (1) in whose cross arm (3) the spark erosion electrode with lowering device is disposed, characterized in that disposed on each portal support (2) for a closure plate (11) to be received thereon are at least two substantially horizontal receiving members (13, 14, 17) which fit into recesses (15) in the closure plates (11) and which are coupled to a more particularly pneumatic drive (20) for the performance of a movement with the suspended closure plate (11) in the direction away from the tank (9).

2. A spark erosion machine according to claim 1, characterized in that each pair of receiving members (14, 17) can be actuated by a common drive (20).

3. A spark erosion machine according to claim 2, characterized in that the receiving members are bolts (14) with hooks.

4. A spark erosion machine having a travelling working table (8) for the clamping of the workpieces (23) to be processed, a tank (9) around the working table (8) for receiving the dielectric liquid, and a portal (1) in whose cross arm (3) the spark erosion electrode with lowering device is disposed, characterized in that mounted in the portal supports (2) are levers (17) which can pivot around a vertical axis and which are connected at one end to a hydraulic or pneumatic drive (20) and at the other end can be articulated to a closure plate (11).

5. A spark erosion machine according to one of claims 1 to 4, characterized in that the dielectric supply line (24) is disposed in at least one of the closure plates (11).

**Revendications**

1. Machine d'électroérosion avec une table de travail (8) déplaçable pour tendre les pièces à travailler (23), un récipient (9) autour de la table de travail (8) pour recevoir le liquide diélectrique, et un portique (1) dans la traverse (3) duquel est disposée l'électrode d'électroérosion avec dispositif de descente, caractérisée en ce qu'au moins deux leveurs horizontaux adjacents (13, 14, 17) sont prévus à chaque poteau (2) du portique, pour une plaque de fermeture (11) devant être reçue dessus, qui viennent en prise dans des évidements (15) des plaques de fermeture (11) et qui sont accouplés à une commande (20), en particulier pneumatique, pour effectuer un déplacement dans la direction d'écartement par rapport au récipient (9), avec la plaque de fermeture (11) suspendue.

2. Machine d'électroérosion selon la revendication 1, caractérisée en ce qu'à chaque fois deux leveurs (14, 17) peuvent être actionnés par une commande (20) commune.

3. Machine d'électroérosion selon la revendication 2, caractérisée en ce que les leveurs sont des verrous (14) à crochet.

4. Machine d'électroérosion avec une table de travail (8) déplaçable pour tendre les pièces à travailler (23), un récipient (9) autour de la table de travail (8) pour recevoir le liquide diélectrique, et un portique (1) dans la traverse (3) duquel est disposée l'électrode d'électroérosion avec dispositif de descente, caractérisée en ce que des leviers (17) sont montés pivotants autour d'un axe vertical dans les poteaux (2) du portique et sont reliés à une extrémité à une commande (20) hydraulique ou pneumatique et peuvent être articulés à l'autre extrémité à une plaque de fermeture (11).

5. Machine d'électroérosion selon l'une des revendications 1 à 4, caractérisée en ce que la conduite d'amenée (24) du diélectrique est disposée dans au moins l'une des plaques de fermeture (11).

Fig.1

Fig.2